# EUROPÄISCHE PATENTSCHRIFT

(11) **EP 1 357 653 B1**
(45) Veröffentlichungstag und Bekanntmachung des Hinweises auf die Patenterteilung: **21.05.2008**
(21) Anmeldenummer: 03007856.2
(22) Anmeldetag: 05.04.2003
(51) Int. Cl.: H02G 3/18

(54) **Geräteeinsatz**
Flush mounted appatatus holder
Support d'appareil encastré

(30) Priorität: 26.04.2002 DE 20206924 U
(43) Veröffentlichungstag der Anmeldung: 29.10.2003
(73) Patentinhaber: OBO Bettermann GmbH & Co. KG, 58710 Menden (DE)
(72) Erfinder: Raschke, Jörg, 41674 Wiehl (DE)
(74) Vertreter: Patentanwälte Ruff, Wilhelm, Beier, Dauster & Partner

(56) Entgegenhaltungen:
- DE-U- 9 213 911
- GB-A- 1 435 131
- GB-A- 2 067 026

## Beschreibung

Die Erfindung betrifft einen Geräteeinsatz für naß gepflegte Böden mit einem Kassettenrahmen zum Aufnehmen von Installationsgeräten und einem auf den Kassettenrahmen aufsetzbaren Deckel, wobei der Kassettenrahmen und der Deckel einen umlaufenden Rand aufweisen und der Rand des Deckels innerhalb des Rands des Kassettenrahmens angeordnet werden kann, wobei einander zugewandte vertikale Seitenflächen des Rands des Kassettenrahmens und des Rands des Deckels bei auf den Kassettenrahmen aufgesetztem Deckel parallel zueinander verlaufen, und wobei zwischen den einander zugewandten parallelen Seitenflächen des Rands des Deckels und des Rands des Kassettenrahmens eine umlaufende Dichtung vorgesehen ist.

Aus dem deutschen Gebrauchsmuster G 92 13 911.6 ist ein gattungsgemäßer Geräteeinsatz bekannt. Ein quadratischer Deckel wird dort mittels mehrerer Schrauben gegen eine Grundplatte des Kassettenrahmens gezogen, um eine zwischen dem Boden des Deckels und der Grundplatte des Kassettenrahmens angeordnete umlaufende Dichtung zu komprimieren. In der Mitte des Deckels kann ein höhenverstellbarer Tubus als Leitungsauslass vorgesehen sein.

Aus dem europäischen Patent EP 0 648 000 B1 ist ein Geräteeinsatz bekannt, bei dem ein Deckel an einem Kassettenrahmen schwenkbar befestigt ist. Zur Abdichtung des Deckels gegen den Kassettenrahmen wird der Deckel mittels einer an diesem angeordneten Verriegelung gegen einen umlaufenden Dichtungsring im Kassettenrahmen gezogen.

Ein weiterer Geräteeinsatz für naß gepflegte Böden ist aus dem deutschen Gebrauchsmuster GM 79 09 964 bekannt. Ein Deckel weist dort an seiner Unterseite eine umlaufende Gummidichtung auf, die in eine passende umlaufende Nut eines Kassettenrahmens eingreifen kann. Die Dichtung wird gegen den Grund der Nut durch die Gewichtskraft einer auf dem Deckel aufliegenden Steinplatte gepresst.

Eine Zugangsluke zu Installationen, beispielsweise zu Elektroinstallationen ist in der GB 2 067 026 A beschrieben. Diese Zugangsluke weist einen einstückigen Rahmen auf, in dem eine einstückig, topfartig geformte Abdeckung aufgenommen ist. Die Abdeckung weist einen Rand auf. Der Rahmen definiert mittels einer zylindrischen Oberfläche eine zylindrische Ausnehmung. Der Rand der Abdeckung ist im Bereich der zylindrischen Oberfläche angeordnet. Einander zugewandte vertikale Seitenflächen des Randes und der Oberfläche verlaufen teilweise parallel. Zwischen der Abdeckung und dem Rahmen, beziehungsweise der Oberfläche ist eine umlaufende Dichtung angeordnet. Die Abdeckung ist in einer Schnittansicht im Wesentlichen U-förmig ausgebildet

In der DE 92 13 911 U1 ist eine Unterfluranschlussdose beschrieben, deren Hauptmerkmal ein domartiger Leitungsauslass ist, der den Zweck erfüllt, das Eindringen von Schwallwasser in die Unterfluranschlussdose zu verhindern. Der domartige Leitungsauslass ist je nach Ausführungsform abnehmbar und gegen eine Abdeckplatte austauschbar bzw. auch versenkbar ausgeführt.

Die GB 14 35 131 A beschreibt eine Unterflurgerätedose, die insbesondere auch für eine Verwendung in einem ungeschützten Umfeld wie auf Balkons und Terrassen geeignet ist. Die Unterflurgerätedose besteht aus einer oben offenen Gerätedose und einem Deckel, wobei die Gerätedose mindestens zwei am Rand umlaufende und nach oben offene Nuten aufweist, in die entsprechende umlaufende Rippen des Deckels von oben eingreifen, so dass insbesondere das Eindringen von Wasser verhindert werden kann.

Mit der Erfindung soll ein Geräteeinsatz für naß gepflegte Böden bei einfachem Aufbau zuverlässig gegen eindringendes Wasser abgedichtet werden.

Erfindungsgemäß ist hierzu ein Geräteeinsatz für naß gepflegte Böden mit einem Kassettenrahmen zum Aufnehmen von Installationsgeräten und einem auf den Kassettenrahmen aufsetzbaren Deckel vorgesehen, wobei der Kassettenrahmen und der Deckel einen umlaufenden Rand aufweisen und der Rand des Deckels innerhalb des Rands des Kassettenrahmens angeordnet werden kann, wobei einander zugewandte vertikale Seitenflächen des Rands des Kassettenrahmens und des Rands des Deckels bei auf den Kassettenrahmen aufgesetztem Deckel parallel zueinander verlaufen, bei dem zwischen den einander zugewandten parallelen Seitenflächen des Rands des Deckels und des Rands des Kassettenrahmens eine umlaufende Dichtung vorgesehen ist und wobei der Rand des Deckels und/oder der Rand des Kassettenrahmens aus einem Materialstreifen bestehen, dessen Stirnseiten über deren gesamte Breite durchgehend miteinander verbunden sind.

Durch die umlaufende Dichtung erfolgt die Abdichtung des Deckels gegenüber dem Kassettenrahmen durch die Kompression der umlaufenden Dichtung in einer Richtung senkrecht zu den Seitenflächen, das bedeutet bei üblichem, bodenbündigem Einbau horizontal und parallel zu einer Bodenoberfläche. Die vertikale Ausrichtung des Deckels kann dadurch exakt so eingestellt werden, dass die Oberkante des Deckels mit der Bodenoberfläche fluchtet, ohne dabei auf die notwendige Kompression einer in vertikaler Richtung komprimierten Dichtung zur Erzeugung der Dichtheit achten zu müssen. Auch bei einem Ermüden der Dichtung bleibt somit die vertikale Ausrichtung exakt erhalten. Das Abdichten des Deckels gegenüber dem Kassettenrahmen ist durch einfaches Aufsetzen des Deckels möglich und insbesondere sind keine Schrauben oder Verriegelungen erforderlich, um den Deckel gegen den Kassettenrahmen zu ziehen und dadurch eine Dichtung zu komprimieren, da die Dichtung in horizontaler Richtung beim Aufsetzen des Deckels auf den Kassettenrahmen komprimiert wird.

Durch den Materialstreifen kann bei einfachem Aufbau des Rands aus einem an den Stirnseiten verbundenen Materialstreifen die zuverlässige Abdichtung des Geräteeinsatzes gewährleistet werden. Beispielsweise können Blechstreifen an ihren Stirnseiten durchgehend verschweißt werden. Alternativ werden die Stirnseiten von Materialstreifen miteinander verklebt.

In Weiterbildung der Erfindung weisen der Rand des Deckels und/oder der Rand des Kassettenrahmens eine umlaufende Nut zum Einlegen der Dichtung auf.

Eine umlaufende Nut in einem oder beiden einander gegenüberliegenden Rändern gewährleistet eine sichere Befestigung der Dichtung, beispielsweise durch Einkleben in die Nut, und eine zuverlässige Abdichtung, da die Dichtung dann beim Aufsetzen des Deckels auf den Kassettenrahmen nicht aus ihrer Ausgangslage verschoben wird.

In Weiterbildung der Erfindung ist die Dichtung als elastischer Ring mit kreisförmigem Querschnitt ausgebildet oder die Dichtung weist wenigstens eine, im wesentlichen radial abragende Dichtlippe auf.

Besonders kostengünstig herstellbar sind Dichtringe mit kreisförmigem Querschnitt. Die zum Einführen des Deckels in den Kassettenrahmen und zum Komprimieren der Dichtung erforderlichen Kräfte können durch Verwendung einer Dichtung mit einer Dichtlippe deutlich verringert werden.

In Weiterbildung der Erfindung ist der Deckel mit einem zentralen Schnurauslaß versehen.

Vorteilhafterweise ist der Schnurauslaß als höhenverstellbarer Tubus ausgebildet, der in eine Gebrauchsposition, in der er den Rand des Deckels überragt, und in eine Ruheposition, in der er mit dem Rand des Deckels bündig abschließt, verstellt werden kann.

Durch diese Maßnahmen können in den Geräteeinsatz zu führende Anschlusskabel schwallwassergeschützt eingeführt werden, und wenn keine Anschlusskabel eingeführt sind, ist der Geräteeinsatz bündig mit der übrigen Bodenoberfläche.

In Weiterbildung der Erfindung sind der Kassettenrahmen und/oder der Deckel als Blechbiegeteil ausgebildet.

Durch diese Maßnahmen kann der Geräteeinsatz stabil und vergleichsweise kostengünstig ausgeführt werden. Als Blechmaterial können beispielsweise optisch ansprechende und dauerhafte Materialien wie Edelstahl zum Einsatz kommen.

In Weiterbildung der Erfindung liegen die einander zugewandten vertikalen und parallelen Seitenflächen des Rands des Kassettenrahmens und des Rands des Deckels jeweils auf einem Kreisumfang.

Auf diese Weise kann eine gleichmäßige Dichtwirkung erzielt werden, da sich der Deckel in dem Kassettenrahmen durch die Federkraft der Dichtung so ausrichten wird, dass die Dichtung über den gesamten Umfang im wesentlichen gleichmäßig belastet ist.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine perspektivische Ansicht eines erfindungsgemäßen Geräteeinsatzes gemäß einer ersten bevorzugten Ausführungsform,
- Fig. 2: eine teilweise Schnittansicht des Geräteeinsatzes der Fig. 1,
- Fig. 3: eine teilweise Schnittansicht eines Geräteeinsatzes gemäß einer zweiten bevorzugten Ausführungsform,
- Fig. 4: eine Darstellung des Deckels des Geräteeinsatzes der Fig. 1 in auseinandergezogener Darstellung,
- Fig. 5: eine weitere auseinandergezogene Darstellung des Deckels der Fig. 1 und
- Fig. 6: eine perspektivische Darstellung des Geräteeinsatzes der Fig. 1 bei abgehobenem Deckel.

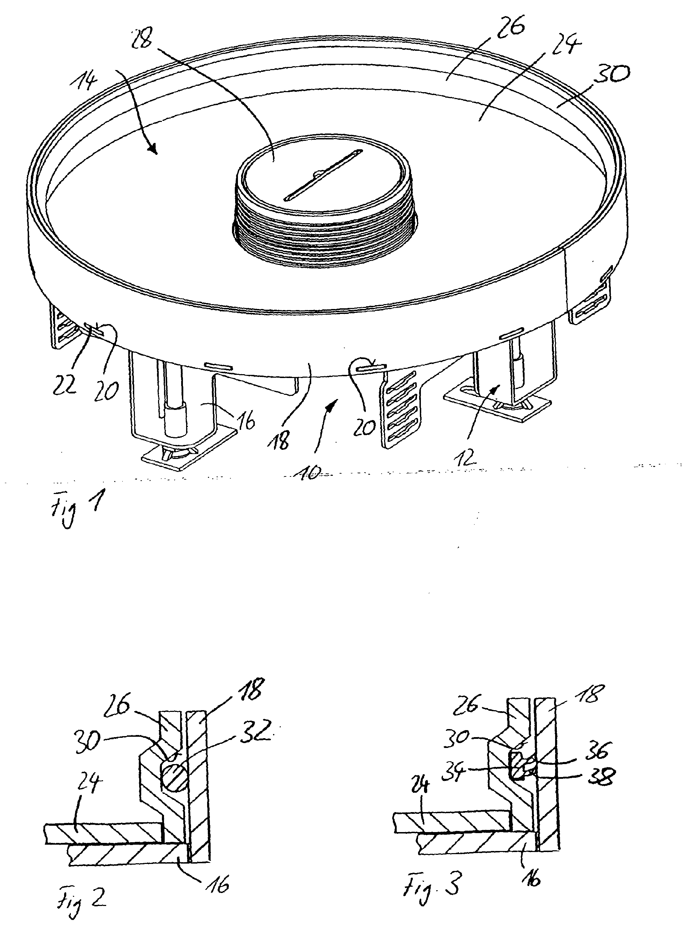

Ein in der Fig. 1 perspektivisch dargestellter Geräteeinsatz 10 weist einen Kassettenrahmen 12 und einen auf den Kassettenrahmen 12 aufsetzbaren Deckel 14 auf, der auch als Einlegekassette bezeichnet werden kann. Der Kassettenrahmen 12 weist einen als Blechbiegeteil ausgebildeten Grundkörper 16 und einen an dem Grundkörper 16 angesetzten kreisförmigen Rand 18 auf. Der Rand 18 besteht aus einem Blechstreifen, der an seinen Stirnseiten durchgehend verschweißt ist und dadurch einen geschlossenen Kreisring bildet. An seiner, dem Grundkörper 16 zugewandten Längsseite weist der Rand 18 gleichmäßig beabstandete und über den gesamten Umfang verteilte rechteckförmige Ausnehmungen 20 auf, in die passende Vorsprünge 22 des Grundkörpers 16 eingreifen. Der Rand 18 wird mittels der Vorsprünge 22 und der Ausnehmungen 20 formschlüssig an dem Grundkörper 16 gehalten.

Der Deckel 14 weist eine im wesentlichen kreisförmige Grundplatte 24 und eine an den Umfang der Grundplatte 24 angesetzten Rand 26 auf. Der Rand 26 besteht wie der Rand 18 aus einem Blechstreifen, der an seinen Stirnseiten durchgehend verschweißt ist und einen geschlossenen Kreisring bildet. Die Grundplatte 24 und der Rand 26 des Deckels 14 sind in gleicher Weise aneinander befestigt wie der Grundkörper 16 und der Rand 18. Der Rand 26 des Deckels 14 weist eine umlaufende Nut 30 auf, die radial nach außen geöffnet ist und für die Aufnahme des Dichtungsrings vorgesehen ist.

Wie in der Fig. 1 zu erkennen ist, verlaufen der Rand 18 des Kassettenrahmens 12 und der Rand 26 des Deckels 14 parallel zueinander. Zwischen den einander zugewandten Oberflächen des Rands 18 und des Rands 26 ist ein in der Fig. 1 nicht sichtbarer Dichtungsring angeordnet, der den Zwischenraum zwischen dem Rand 18 und dem Rand 26 abdichtet und dadurch verhindert, dass durch diesen Zwischenraum Wasser hindurchtreten und zu gegebenenfalls im Kassettenrahmen 12 angeordneten Gerätedosen gelangen kann.

Der Deckel 14 ist weiterhin mit einem Schnurauslaß 28 versehen, der in der Mitte des Deckels 14 angeordnet ist und zum Einführen von Anschlusskabeln dient, die zu Gerätedosen geführt werden sollen, die in dem Kassettenrahmen 12 angeordnet sind.

In der abschnittsweisen Schnittansicht der Fig. 2 sind der Rand 18 und ein Abschnitt des Grundkörpers 16 des Kassettenrahmens 12 zu erkennen. Weiterhin ist der Deckel 14 abschnittsweise durch den Rand 26 und die Grundplatte 24 dargestellt. Gut zu erkennen ist die umlaufende Nut 30, die die umlaufende Dichtung 32 aufnimmt. Die Dichtung 32 weist einen kreisförmigen Querschnitt auf und wird zwischen einem Nutgrund der Nut 30 und der gegenüberliegenden Oberfläche des Rands 18 komprimiert. Die Dichtung 32 dichtet dadurch den umlaufenden Spalt zwischen dem Rand 26 des Deckels 14 und dem Rand 18 des Kassettenrahmens 12 ab und verhindert dadurch, dass Wasser durch diesen Zwischenraum hindurchtreten kann.

Indem die Dichtung 32 zur Abdichtung des Deckels 14 gegen den Kassettenrahmen 12 zwischen den senkrechten Seitenflächen des Rands 26 und des Rands 18 angeordnet ist, ist die vertikale Ausrichtung des Deckels 14 gegenüber dem Kassettenrahmen 12 völlig unabhängig von der Dicke oder der Elastizität der Dichtung 32. Infolgedessen bleibt die in der Fig. 2 dargestellte exakt bündige Ausrichtung der oberen Kante des Rands 26 und des Rands 18 auch dann erhalten, wenn die Dichtung 32 ermüdet oder gar eine Dichtung mit größerem Durchmesser in die Nut 30 eingelegt wird. Dennoch ist der Geräteeinsatz 10 sicher gegen eindringendes Wasser geschützt und dadurch für naß gepflegte Böden geeignet.
Die abschnittsweise Schnittansicht der Fig. 3 zeigt eine gegenüber der Darstellung der Fig. 2 geänderte Dichtungsform. Eine Dichtung 34 in der Fig. 3 ist ebenfalls in die Nut 30 eingesetzt, weist aber zwei sich in radialer Richtung, d.h. vom Nutgrund der Nut 30 aus in Richtung auf die gegenüberliegende Oberfläche des Rands 18, erstreckende Dichtlippen 36 und 38 auf. Die Erstreckung der Dichtung 34 mit den Dichtlippen 36 und 38 in radialer Richtung ist etwas größer als die lichte Weite zwischen dem Nutgrund der Nut 30 und der gegenüberliegenden Seitenfläche des Rands 18. Dadurch werden die Dichtlippen beim Einführen des Deckels 14 in den Kassettenrahmen 12 entgegen der Einführrichtung ausgelenkt und liegen dadurch an der innen liegenden Seitenfläche des Rands 18 an. Wie in der Fig. 3 zu erkennen ist, wird dadurch eine zuverlässige Abdichtung des Zwischenraums zwischen dem Rand 26 und dem Rand 18 erreicht. Darüber hinaus ist die zum Einführen oder Eindrücken des Deckels 14 in den Kassettenrahmen 12 erforderliche Kraft geringer als bei einem kreisrunden Dichtungsquerschnitt, wie er in der Fig. 2 dargestellt ist.

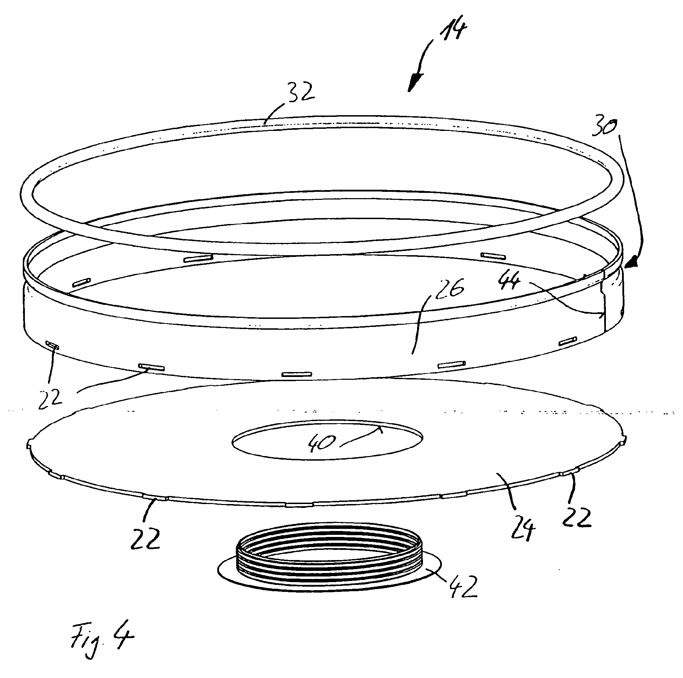

Die Darstellung der Fig. 4 zeigt den Deckel 14 in auseinander gezogener Darstellung. Gut zu erkennen ist die Grundplatte 24 mit den sich in radialer Richtung erstreckenden, quaderförmigen Vorsprüngen 22. Die Grundplatte 24 weist eine mittig angeordnete Bohrung 40 zum Einsetzen des tubusförmigen Schnurauslasses auf. In der Darstellung der Fig. 4 ist lediglich ein Gewindering 42 mit Ringflansch dargestellt, der von unten in die Bohrung 40 der Grundplatte 24 eingesetzt, an dieser befestigt wird und zur Befestigung des tubusförmigen Schnurauslasses dient. Der Rand 26 weist die rechteckförmigen Ausnehmungen 20 auf, die, wie erläutert, im montierten Zustand mit den quaderförmigen Vorsprüngen 22 eingreifen. Die Stirnseiten des Rands 26 sind mittels einer Naht 44 durchgehend miteinander verschweißt, wobei die Naht auch über die Nut 30 hinwegläuft. Der Dichtungsring 32 wird in die Nut 30 eingelegt. Im Falle einer Nut mit nicht kreisförmigem Querschnitt, wie sie beispielsweise in der Fig. 3 gezeigt ist, kann es zweckmäßig sein, die Dichtung in die Nut einzukleben.

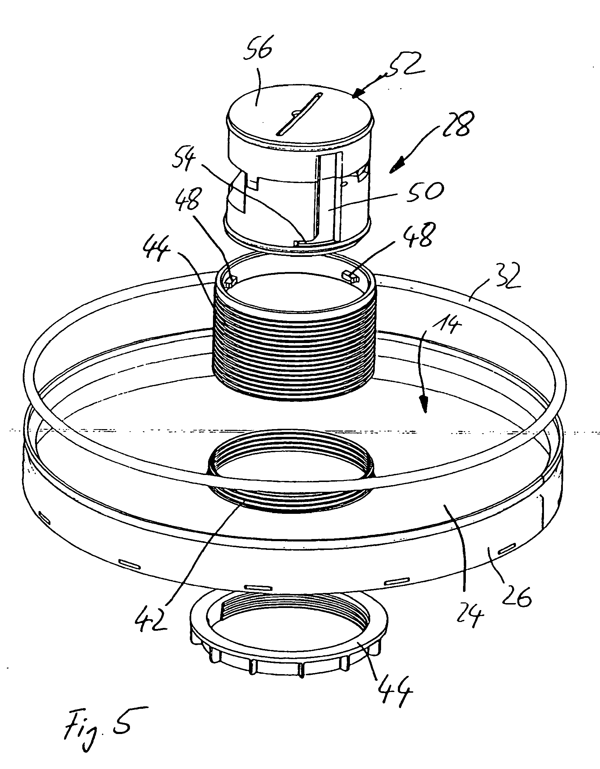

In der Darstellung der Fig. 5 ist neben dem Deckel 14 und der Dichtung 32 der tubusförmige Schnurauslaß 28 mit seinen Bestandteilen dargestellt. Wie bereits ausgeführt wurde, ist der Gewindering 42 in die zentrale Bohrung des Deckels 14 eingesetzt. In den Gewindering 32 kann eine röhrförmige Tubushalterung 44 eingeschraubt werden, die auf ihrer Außenseite ein Gewinde trägt. Die rohrförmige Tubushalterung 44 wird dabei so weit in den Gewindering 42 eingeschraubt, bis ihre Oberkante mit der Oberkante des Rands 26 des Deckels 14 bündig ist. Der Gewindering 42 ist dabei an der Grundplatte 24 befestigt, beispielsweise verklebt oder verschweißt. In dieser Stellung wird die rohrförmige Tubushalterung 44 dann gesichert, indem von der gegenüberliegenden Seite der Grundplatte 24 eine Kontermutter 46 auf die Tubushalterung 44 aufgeschraubt wird. Auf diese Weise ist die Tubushalterung 44 in der Höhe einstellbar. Dennoch muss auf der Oberseite der Grundplatte 24 keine raumgreifende Kontermutter angeordnet werden, so dass in den Deckel 14 eine dem übrigen Bodenbelag entsprechende und leicht herstellbare kreisringförmige Bodenplatte eingelegt werden kann. Speziell bei Steinböden ist es vorteilhaft, lediglich Einlegeplatten mit einfachen Geometrien anzufertigen zu müssen.

Die Tubushalterung 44 weist im Bereich ihres oberen Endes auf der Innenseite mehrere Vorsprünge 48 auf. Die Vorsprünge 48 sind dafür vorgesehen, in passende Nuten 50 eines Tubus 52 einzugreifen. Die Nuten 50 weisen an einem Ende seitlich abzweigende Stichnuten 54 auf, deren Höhe im wesentlichen der Höhe der Vorsprünge 48 entspricht. Der Tubus 52 ist mittels der Nuten 50, 54 und der Vorsprünge 48 damit nach Art eines Bajonettverschlusses in der Tubushalterung 44 gehalten und kann in eine mit der Oberkante der Tubushalterung 44 und der Oberkante des Randes 26 bündige Ruhelage sowie eine demgegenüber erhöhte Gebrauchslage verschoben werden. In der erhöhten Gebrauchslage wird der Tubus 52 dadurch arretiert, dass er in der Fig. 5 im Gegenuhrzeigersinn verdreht wird, so dass die Vorsprünge 48 in die Stichnuten 54 eingreifen. Wie in der Fig. 5 weiter zu erkennen ist, weist der Tubus 52 einen aufklappbaren Deckel 56 auf, um das Einführen von elektrischen Anschlusskabeln mit Steckern zu ermöglichen.

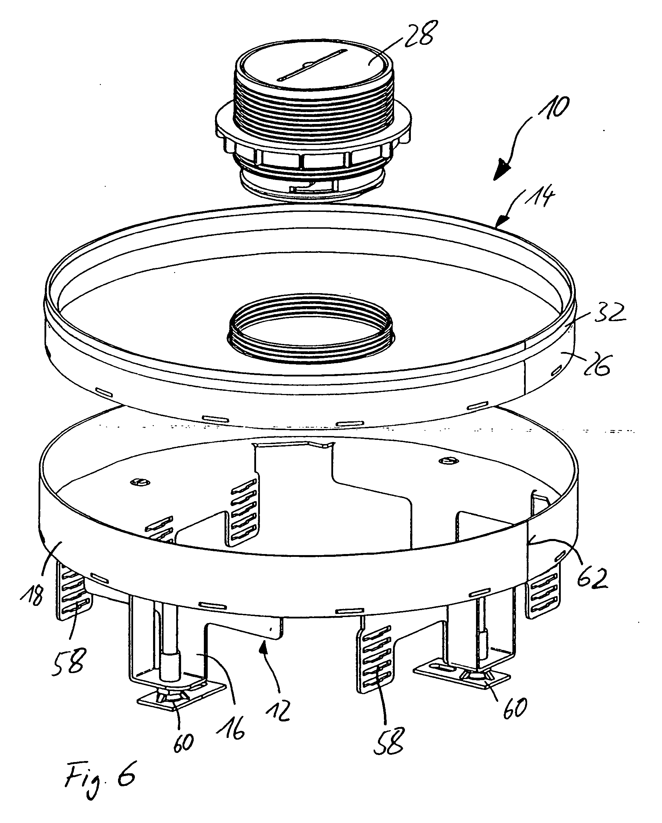

Eine weitere perspektivische Darstellung des Geräteeinsatzes 10 zeigt die Fig. 6. In der Darstellung der Fig. 6 ist der Deckel 14 vom Kassettenrahmen 12 abgehoben und der tubusförmige Schnurauslaß 28 ist nicht an dem Deckel 14 befesteigt. In der Darstellung der Fig. 6 gut zu erkennen ist, dass sowohl der Deckel 14 als auch der Kassettenrahmen 12 als Blechbiege- und Blechfügeteile ausgebildet sind. Der Grundkörper 16 des Kassettenrahmens 12 weist mehrere Rastleitern 58 auf, in die Gerätedosen eingesetzt werden können. Der Kassettenrahmen 12 ist mit höhenverstellbaren Füßen 60 versehen. Der Rand 18 des Kassettenrahmens 12 ist wie der Rand 26 des Deckels 14 aus einem kreisrund gebogenen Materialstreifen aufgebaut, der an seinen Stirnseiten mittels einer durchgehenden Schweißnaht 62 verbunden ist. Indem die Schweißnaht 62 durchgehend ausgeführt ist, kann kein Wasser durch den Nahtbereich an der Dichtung 32 vorbei durch den Zwischenraum zwischen dem Rand 18 und dem Rand 26 gelangen.

## Patentansprüche

1. Geräteeinsatz für naß gepflegte Böden mit einem Kassettenrahmen (12) zum Aufnehmen von Installationsgeräten und einem auf den Kassettenrahmen (12) aufsetzbaren Deckel (14), wobei der Kassettenrahmen (12) und der Deckel (14) einen umlaufenden Rand (18, 26) aufweisen und der Rand (26) des Deckels (14) innerhalb des Rands (18) des Kassettenrahmens (12) angeordnet werden kann, wobei einander zugewandte vertikale Seitenflächen des Rands (18) des Kassettenrahmens (12) und des Rands (26) des Deckels (14) bei auf den Kassettenrahmen (12) aufgesetztem Deckel (14) parallel zueinander verlaufen, wobei zwischen den einander zugewandten parallelen Seitenflächen des Rands (26) des Deckels (14) und des Rands (18) des Kassettenrahmens (12) eine umlaufende Dichtung (32; 34) vorgesehen ist, **dadurch gekennzeichnet, dass** der Rand (26) des Deckels (14) und/oder der Rand (18) des Kassettenrahmens (10) aus einem Materialstreifen bestehen, dessen Stirnseiten über deren gesamte Breite durchgehend miteinander verbunden sind.

2. Geräteeinsatz nach Anspruch 1, **dadurch gekennzeichnet, dass** der Rand (26) des Deckels (14) und/oder der Rand (18) des Kassettenrahmens eine umlaufende Nut (30) zum Einlegen der Dichtung (32; 34) aufweisen.

3. Geräteeinsatz nach Anspruch 1 oder 2, **dadurch gekennzeichnet, dass** die Dichtung (32) als elastischer Ring mit kreisförmigen Querschnitt ausgebildet ist.

4. Geräteeinsatz nach Anspruch 1 oder 2, **dadurch gekennzeichnet, dass** die Dichtung (34) wenigstens eine, im wesentlichen radial abragende Dichtlippe (36; 38) aufweist.

5. Geräteeinsatz nach einem der vorstehenden Ansprüche, **dadurch gekennzeichnet, dass** der Deckel (14) mit einem zentralen Schnurauslass (28) versehen ist.

6. Geräteeinsatz nach Anspruch 5, **dadurch gekennzeichnet, dass** der Schnurauslass (28) als höhenverstellbarer Tubus ausgebildet ist, der in eine Gebrauchsposition, in der er den Rand (26) des Deckels (14) überragt, und in eine Ruheposition, in der er mit dem Rand (26) des Deckels (14) bündig abschließt, verstellt werden kann.

7. Geräteeinsatz nach einem der vorstehenden Ansprüche, **dadurch gekennzeichnet, dass** der Kassettenrahmen (12) und/oder der Deckel (14) als Blechbiegeteil ausgebildet sind.

8. Geräteeinsatz nach einem der vorstehenden Ansprüche, **dadurch gekennzeichnet, dass** die einander zugewandten vertikalen und parallelen Seitenflächen des Rands (18) des Kassettenrahmens (12) und des Rands (26) des Deckels (14) jeweils auf einem Kreisumfang liegen.

## Claims

1. Apparatus insert for wet cleaned floors with a cassette frame (12) for receiving installation devices and an attachable lid (14) which is attachable to the cassette frame (12), whereby the cassette frame (12) and the lid (14) comprise a continuous rim (18, 26) and the rim (26) of the lid (14) can be arranged within the rim (18) of the cassette frame (12), whereby vertical side surfaces facing each other of the rim (18) of the cassette frame (12) and of the rim (26) of the lid (14) of the lid (14) attached to the cassette frame (12) are parallel to each other, whereby a circumferential seal (32; 34) is provided between the facing side areas of the rim (26) of the lid (14) and the rim (18) of the cassette frame (12), **characterised in that** the rim (26) of the lid (14) and/or the rim (18) of the cassette frame (10) comprise a material strip whose face sides are continuously connected to each other across their complete width.

2. Apparatus insert according to Claim 1, **characterised in that** the rim (26) of the lid (14) and/or the rim (18) of the cassette frame shows a circumferential groove (30) for insertion of the seal (32; 34).

3. Apparatus insert according to Claim 1 or 2, **characterised in that** the seal (32) is designed as an elastic ring with circular cross section.

4. Apparatus insert according to Claim 1 or 2, **characterised in that** the seal (34) is provided with at least one essentially radially projecting sealing lip (36; 38).

5. Apparatus insert according to one of the preceding Claims, **characterised in that** the lid (14) is provided with a central cord outlet (28).

6. Apparatus insert according to Claim 5, **characterised in that** the cord outlet (28) is designed as a height adjustable tube which can be adjusted to a usage position in which it projects over the rim (26) of the lid (14) and to a rest position in which it is flush with the rim (26) of the lid (14).

7. Apparatus insert according to one of the preceding Claims, **characterised in that** the cassette frame (12) and/or the lid (14) is designed as formed sheet metal parts.

8. Apparatus insert according to one of the preceding Claims, **characterised in that** the facing vertical and parallel side areas of the rim (18) of the cassette frame (12) and of the rim (26) of the lid (14) are each on a circumference.

## Revendications

1. Support d'appareil encastré pour sols entretenus de manière humide, comprenant un cadre de cassette (12) destiné à loger des appareils d'installation et un couvercle (14) pouvant être posé sur le cadre de cassette (12), le cadre de cassette (12) et le couvercle (14) présentant un bord continu (18, 26) et le bord (26) du couvercle (14) pouvant être disposé à l'intérieur du bord (18) du cadre de cassette (12), des surfaces latérales verticales, tournées l'une vers l'autre, du bord (18) du cadre de cassette (12) et du bord (26) du couvercle (14) s'étendant parallèlement l'une à l'autre lorsque le couvercle (14) est posé sur le cadre de cassette (12), un joint périphérique (32 ; 34) étant prévu entre les surfaces latérales parallèles, tournées l'une vers l'autre, du bord (26) du couvercle (14) et du bord (18) du cadre de cassette (12), **caractérisé en ce que** le bord (26) du couvercle (14) et/ou le bord (18) du cadre de cassette (10) sont constitués d'une bande de matière, dont les côtés frontaux sont raccordés entre eux de manière continue sur toute leur largeur.

2. Support d'appareil encastré selon la revendication 1, **caractérisé en ce que** le bord (26) du couvercle (14) et/ou le bord (18) du cadre de cassette présentent une rainure continue (30) destinée à insérer un joint (32 ; 34).

3. Support d'appareil encastré selon la revendication 1 ou 2, **caractérisé en ce que** le joint (32) est exécuté comme anneau élastique à section circulaire.

4. Support d'appareil encastré selon la revendication 1 ou 2, **caractérisé en ce que** le joint (34) présente au moins une lèvre d'étanchéité (36; 38) dépassant essentiellement en direction radiale.

5. Support d'appareil encastré selon l'une quelconque des revendications précédentes, **caractérisé en ce que** le couvercle (14) est muni d'une sortie de cordon centrale (28).

6. Support d'appareil encastré selon la revendication 5, **caractérisé en ce que** la sortie de cordon (28) est exécutée comme tube réglable en hauteur qui peut être réglé dans une position d'utilisation, dans laquelle il dépasse du bord (26) du couvercle (14), et dans une position de repos, dans laquelle il est au même niveau que le bord (26) du couvercle (14).

7. Support d'appareil encastré selon l'une quelconque des revendications précédentes, **caractérisé en ce que** le cadre de cassette (12) et/ou le couvercle (14) sont exécutés comme une pièce pliée en tôle.

8. Support d'appareil encastré selon l'une quelconque des revendications précédentes, **caractérisé en ce que** les surfaces latérales verticales et parallèles, tournées l'une vers l'autre, du bord (18) du cadre de cassette (12) et du bord (26) du couvercle (14) sont respectivement situées sur une circonférence.
